(19) Europäisches Patentamt
European Patent Office
Office européen des brevets

(11) **EP 4 242 607 B1**

(12) **EUROPEAN PATENT SPECIFICATION**

(45) Date of publication and mention
of the grant of the patent:
**26.11.2025 Bulletin 2025/48**

(21) Application number: **23155068.2**

(22) Date of filing: **06.02.2023**

(51) International Patent Classification (IPC):
**G01J 3/46** *(2006.01)*

(52) Cooperative Patent Classification (CPC):
**G01J 3/463;** G01J 2003/467

(54) **IMPROVED METHOD FOR THE DETERMINATION OF COLOURS**

VERBESSERTES VERFAHREN ZUR BESTIMMUNG VON FARBEN

PROCÉDÉ AMÉLIORÉ POUR LA DÉTERMINATION DE COULEURS

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: **10.03.2022 IT 202200004589**

(43) Date of publication of application:
**13.09.2023 Bulletin 2023/37**

(73) Proprietor: **Urai S.p.A.**
**20057 Assago (MI) (IT)**

(72) Inventor: **Gullo, Leonardo**
**27010 Giussago (PV) (IT)**

(74) Representative: **Praxi Intellectual Property Milano**
**Via Mario Pagano, 69/A**
**20145 Milano (IT)**

(56) References cited:
**WO-A1-2011/126486    WO-A1-99/30136**
**US-A- 2 540 797**

**Description**

**BACKGROUND OF THE INVENTION**

The present invention relates to an improved method for the determination of colour formulas.

The quality control of the colour of paints, inks and the like, is assessed by means of spectrophotometry techniques, from which the colour coordinates for the comparative analyses with respect to the standard are obtained.

The objective quantification of the sensation of colour takes into account three fundamental elements:

- the visual perception of the eye (observer);
- the properties of the illuminant used (natural and artificial light such as filament, neon, LED, etc.) which from the chromatic point of view is considered neutral (white);
- the ability of the colouring material (substantially the dye mixture generating the signal from which the sensation of colour starts) of absorbing and reflecting the light which reaches the eye.

While the visual perception of the eye (observer) and the illuminant properties are well defined and constant, the properties of the material are variable instead. It is in fact possible to have different materials, all of them able to give the same sensation of colour for a specific illuminant.

However, if the spectral reflection of the material in question does not match the one of the standard to be reproduced, by selecting a different illuminant a different sensation of colour will be obtained (the phenomenon of metamerism). In fact, every kind of illuminant irradiates with a different relative energy, causing a different sensation of colour the material being equal.

Therefore, a colour sensation for a specific condition (Ill./Obs.) may be obtained from different dye mixtures. However, only one of these mixtures has the features of the searched material, that is the same reaction with regard to the spectral reflection.

However, it is obvious that it is not reliable to act on the choice of the illuminant in order to condition the colour effect generated by a material different from the real one.

Currently the recovery of the dye mixture composition forming the searched material is carried out by mathematical way, searching the solutions by means of linear equations, usually conditioned by a specific illuminant the values of which are used for the computation.

Examples of such colour calculation methods are disclosed in WO 2011/126486 A1 or US 2 540 797 A.

Particularly, according to the computational method by linear equations the three sensations which the eye receives from the red, green and blue colours (tristimulus sensations, depending on the material and illuminant taken into account) are accounted for, by detecting the amounts of red, green and blue light affecting the eye. The eye sensitivity to these three energies has been quantified by CIE (Commission Internationale de l'Éclairage or International Commission on Illumination) and it is available in the form of numerical tables. However, the simple measure of these tristimulus values cannot be considered unique with respect to the composition of the material to be searched.

In order to overcome this drawback, it is well known how to resort to a more complex mathematical approach, which usually takes advantage of nonlinear equations and wherein only 50-60% of results is able to give a unique and reliable solution.

According to the latter approach, in order to represent the property of the material in the colour context, the reflection percentage in specific points, equidistant 10 nm in the visible light range from 400 to 700 nm, for a total of 31 points, is considered.

Therefore, with regards to the mathematical computation the colour standard STD may be represented by these 31 values. Accordingly set the instrument geometry (which identifies the type of spectrophotometer), one may assume that this approximation is unique, so as to match the referred 31 points to one and only one colorimetric reaction.

If, for example, a point at 400 nm is taken, corresponding to the reflection of the STD colour one wants to reproduce, the goal is to determine the composition of the material able to reduce to the minimum the error $\Delta R$, computed as the squared difference between the standard reflection (Rstd) and the one generated by the computed mixture (Rms): $\Delta R = (Rstd - Rms)^2$.

The total error, that is the error computed on the whole visible range from 400 nm to 700 nm, is given by the sum

$$\text{(I)} \quad {}_1\Sigma_{31} \, \Delta R \cdot i \quad \text{with } i = 1 - 31$$

According to the prior art, therefore, the formula of a standard is computed in a unique way by means of nonlinear equations starting from the 31 reflectance percentage values. A colour formula, significant but not unique, is instead obtained by means of linear equations, which take into account the aforementioned tristimulus values XYZ.

By way of example, the computation methods provide a first step, in which N° of available dyes (e.g.: N° = 24 dyes) is considered and groups of n dyes in formula are formed (for example three dyes per group). For the creation of the groups, one has two options:

- use of dye preselection methods (e.g.: preliminary analysis of the n available dyes as a function of Luminosity, Hue and Saturation of the colour standard). The goal is to reduce the number of n dyes in order to form the least possible groups (only the most suitable);
- computation and formation of all the groups belonging to the combinations

$$N = n! / (r! \cdot (n-r)!)$$

wherein:

n = 1,2,3
(n! represents -> factorial of n: $n \cdot (n-1) \cdot (n-2) \cdot ...$ ; where n = available dyes)
(r! represents -> factorial of r : $r \cdot (r-1) \cdot (r-2) \cdot ....$ ; where r = dyes in the formula).

Subsequently for each single group or any single combination the amounts of dyes needed to obtain the closest reproduction to the standard (the optimum for the dyes considered in the group) are computed.

The whole process is relatively simple if the execution times and the precision level are ignored. On the contrary, obtaining a precise formula within an acceptable time is very complicated.

Therefore, in the approach based on the tristimulus values the use of systems of linear or first-degree equations is provided. This type of approach uses as a representation the standard XYZ, that is the sensations that the eye receives from red (X amount of red light), from green (Y amount of green light) and from blue (Z amount of blue light), considered in the following equations:

$$dX1 \cdot Q1 + dX2 \cdot Q2 + dX3 \cdot Q3 = Xstd$$

$$dY1 \cdot Q1 + dY2 \cdot Q2 + dY3 \cdot Q3 = Ystd$$

$$dZ1 \cdot Q1 + dZ2 \cdot Q2 + dZ3 \cdot Q3 = Zstd$$

wherein:

Q1 represents the % amount of dye 1 (range 0-1%);
Q2 represents the % amount of dye 2 (range 0-1%);
Q3 represents the % amount of dye 3 (range 0-1%);
dX1 represents the amount of red light per % unit amount of dye 1;
dX2 represents the amount of red light per % unit amount of dye 2;
dX3 represents the amount of red light per % unit amount of dye 1;
dY1 represents the amount of green light per % unit amount of dye 1;
dY2 represents the amount of green light per % unit amount of dye 2;
dY3 represents the amount of green light per % unit amount of dye 3;
dZ1 represents the amount of blue light per % unit amount of dye 1;
dZ2 represents the amount of blue light per % unit amount of dye 2;
dZ3 represents the amount of blue light per % unit amount of dye 3;

and wherein:

$$Xstd \text{ (amount of red light emitted by STD)} = {}_1\Sigma_{31} \ Tx \cdot E \cdot Rstd;$$

$$Ystd \text{ (amount of green light emitted by STD)} = {}_1\Sigma_{31} \ Ty \cdot E \cdot Rstd;$$

$$Zstd \text{ (amount of blue light emitted by STD)} = {}_1\Sigma_{31} \ Tz \cdot E \cdot Rstd;$$

where:

Tx, Ty, Tz are the tristimulus functions;
E represents the relative energy of the illuminant.

The values dXn, dYn and dZn (in the example n = 1, 2, 3) are computed for every dye under consideration.
The obtained formula ensures the realized colour is equal to the standard only for the illuminant considered during the processing. There is no guarantee of colour equality in all the other cases (changing the illuminant the formulated colour could be different from the standard).
The alternative approach to the previous one consists in using directly the reflectance values, considering that:

$$Rmix = [(dr1 \cdot Q1) + (dr2 \cdot Q2) + \ldots + (drn \cdot Qn)],$$

where:

Rmix represents the % reflection obtained with the mixture;
drn represents the increase of R for a unit of Q (real 0-1% of Q);

Then the method for computing Q1, Q2, ... Qn is that of computing the minimum error for the following sum:

Minimum error = $(Rstd400 - Rmix400)^2 + (Rstd410 - Rmix410)^2 + (Rstd420 - Rmix420)^2 + \ldots + (Rstd700 - Rmix700)^2$

which in compact form becomes:

$$(I) \; _1\Sigma_{31} \; \Delta R \cdot i \; \text{with} \; i = 1 - 31 \; \text{and} \; \Delta R = (Rstd - Rms)^2$$

The development of the above reported expression implies the use of a nonlinear method for its solution, which however will not always guarantee an acceptable solution. In fact, one tries to reproduce the exact reflection spectrum of the standard with the mixture of available dyes. Thus, for example, if in the whole set one or more dyes which singularly or in combination with others may give the same reflection of the standard are missing, no acceptable solution will be obtained.

## SUMMARY OF THE INVENTION

According to the method of the invention one resorts to a particular combination of the two above-described methods, providing the steps of claim 1. Favourable modifications are defined in the dependent claims.

## BRIEF DESCRIPTION OF THE DRAWINGS

Fig. 1 illustrates a table with data about differences of colour on the illuminants considered in Example 1 of the invention;

Fig. 2 illustrates la overlapping of STD and BAT spectra of Example 1;

Fig. 3 illustrates the spectral reflection of STD of the mixture of Example 1;

Fig. 4 illustrates the STD and BAT spectra of Example 2;

Fig. 5 illustrates the spectral reflection of STD of the mixture of Example 2;

Fig. 6 illustrates the difference of colour of the main illuminant and the other illuminants of Example 2;

Fig. 7 illustrates the STD and BAT spectra of Example 3;

Fig. 8 illustrates la spectral reflection of STD of the mixture of Example 3;

Fig. 9 illustrates the difference of colour of the main illuminant and the other illuminants of Example 3.

## DETAILED DESCRIPTION OF THE PREFERRED EMBODIMENTS

For a mixture of three components (n = 1, 2, 3) the latter are:

$$dX1 \cdot DQ1 + dX2 \cdot DQ2 + dX3 \cdot DQ3 = Xstd - X1°Form$$

$$dY1 \cdot DQ1 + dY2 \cdot DQ2 + dY3 \cdot DQ3 = Ystd - Y1°Form$$

$$dZ1 \cdot DQ1 + dZ2 \cdot DQ2 + dZ3 \cdot DQ3 = Zstd - Z1°Form$$

where:

DQ1 represents the addition to the formula; % of dye 1 (0-1%);
DQ2 represents the addition to the formula; % of dye 2 (0-1%);
DQ3 represents the addition to the formula; % of dye 3 (0-1%);
dX1 represents the amount of red light per unit of dye 1;
dX2 represents the amount of red light per unit of dye 2;
dX3 represents the amount of red light per unit of dye 3;
X1°Form represents the amount of red light emitted by the known formula;
dY1 represents the amount of green light per unit of dye 1;
dY2 represents the amount of green light per unit of dye 2;
dY3 represents the amount of green light per unit of dye 3;
Y1°Form represents the amount of green light emitted by the known formula;
dZ1 represents the amount of blue light per unit of dye 1;
dZ2 represents the amount of blue light per unit of dye 2;
dZ3 represents the amount of blue light per unit of dye 3;
Z1°Form represents the amount of blue light emitted by the first formula;

and wherein:

$$Xstd \text{ (amount of red light emitted by STD)} = {}_1\Sigma_{31} \, Tx \cdot E \cdot Rstd;$$

$$Ystd \text{ (amount of green light emitted by STD)} = {}_1\Sigma_{31} \, Ty \cdot E \cdot Rstd;$$

$$Zstd \text{ (amount of blue light emitted by STD)} = {}_1\Sigma_{31} \, Tz \cdot E \cdot Rstd;$$

where:

Tx, Ty, Tz are the tristimulus functions;
E represents the relative energy of the illuminant.

The differences of the amounts DQ1, DQ2, DQ3 are computed as a function of the difference between the standard and the first formula computed in the first step. The method of the invention therefore takes advantage from the linear approach to correct the errors or the deviations from the standard on the amounts $\Delta X$ of red light, $\Delta Y$ of green light and $\Delta Z$ of blue light obtained with the nonlinear computation. This method always guarantees the optimum in terms of formula.

## Examples

Metamerism

Example 1

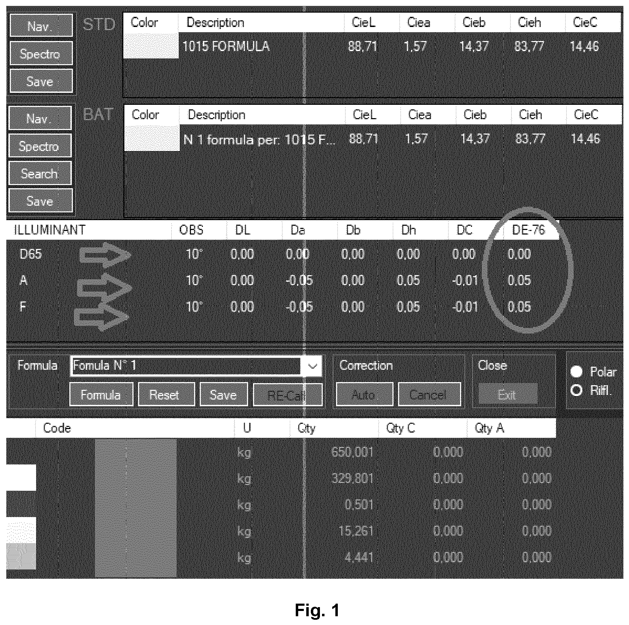

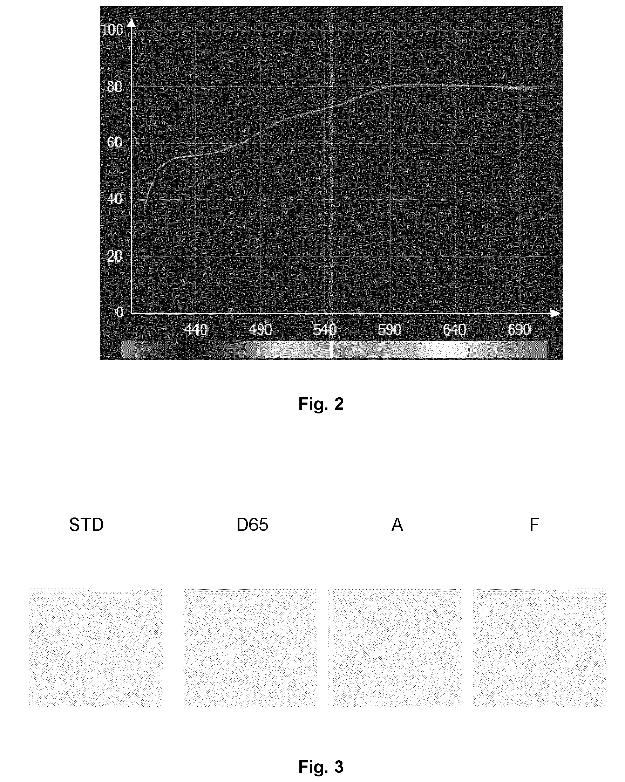

- STD Considered colour -> RAL 1015.
- Formula N°1 with no metamerism.
- The STD and BAT spectra are perfectly overlapping (see Fig. 2).
- The mixture has the same reaction in terms of the spectral reflection of the STD (Fig. 3).
- The colour differences are null on all the considered illuminants (e.g.: D65, A, F; Fig. 1).

Example 2

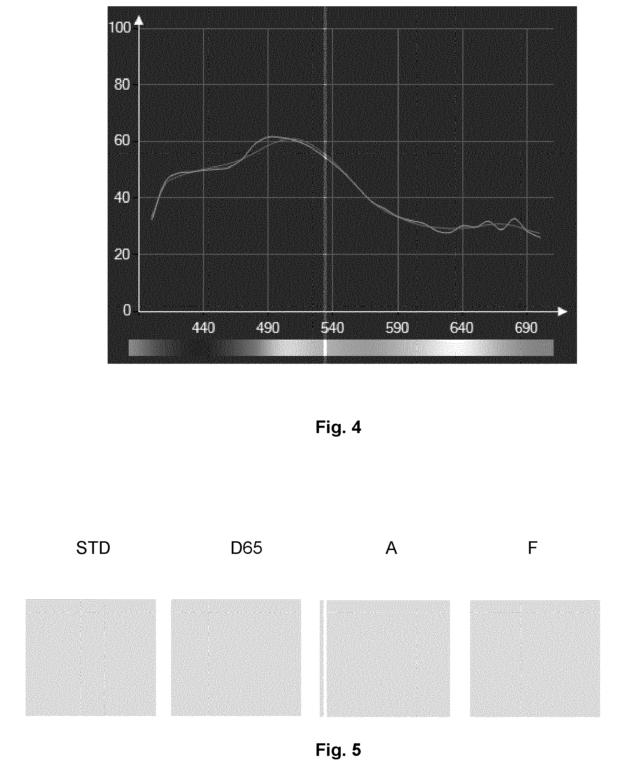

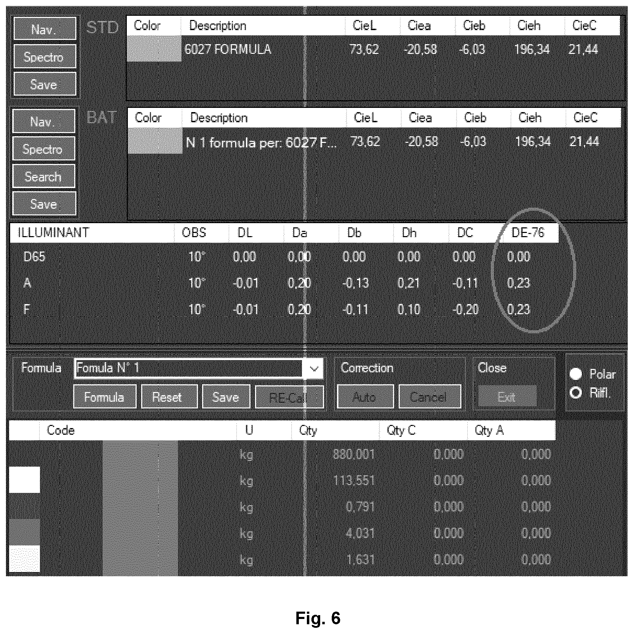

- STD Considered colour -> RAL 6027.
- Formula N°1 with low metamerism.
- The STD and BAT spectra are quite overlapping (Fig. 4).
- The mixture has a similar reaction in terms of the spectral reflection of the STD (Fig. 5).
- Null difference for the main Illuminant (D65) and close to zero for the others (A, F; Fig. 6).

Example 3

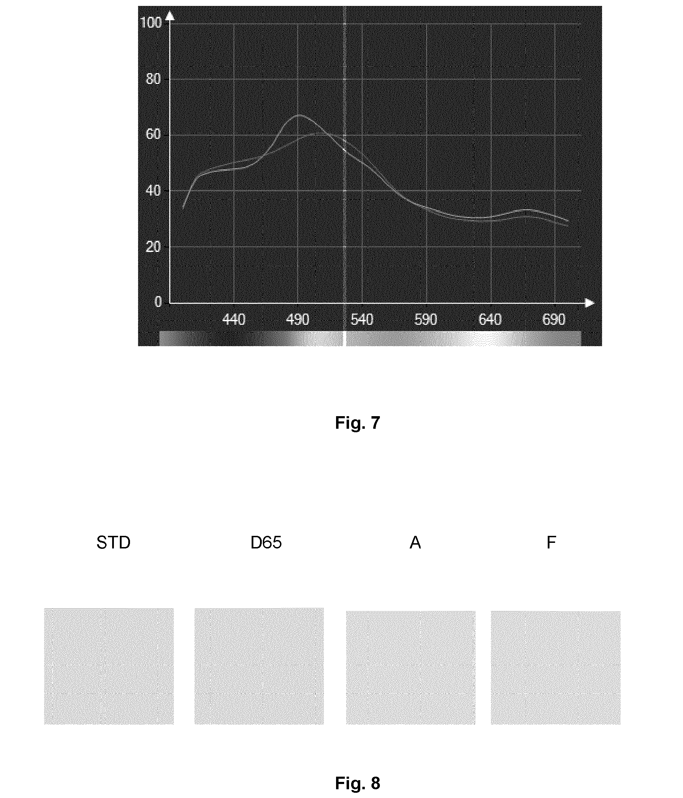

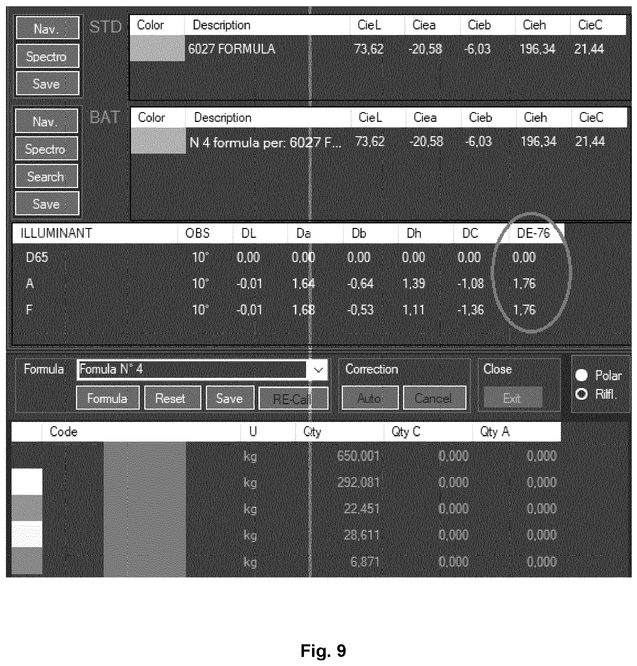

- STD Considered colour -> RAL 6027.
- Formula N° 4, high metamerism.
- The STD and BAT spectra are not overlapping (see Fig. 7).
- The mixture has a different reaction in terms of the spectral reflection of the STD (Figure 8).
- Null difference for the main Illuminant (D65) but high for the others (e.g.: A, F; Fig. 9).

Formulation

With reference to Example 1:

If the dyes used in the formula in a particular proportion are able to give the same reaction of spectral reflection of the STD, then the computational method based on nonlinear equations, gives a unique solution, the best possible one. In these cases there is no need to resort to other resolution methods.

With reference to Example 2:

If the dyes used in the formula in a particular proportion are able to give a reaction of spectral reflection similar and close to the STD one, then the computational method based on nonlinear equations already gives an optimal solution, which though could however be improved with regard to the differences of the main illuminant with a Tristimulus linear approach (addition method).

With reference to Example 3:

If the dyes used in the formula are not able to give a reaction of spectral reflection equal or alternatively similar and close to the STD one, then the computational method based on nonlinear equations might not give a solution or might give a solution with colorimetric differences still high with respect to the STD. In the first case (no solution) one resorts entirely to the tristimulus linear approach, for the verification of the existence of a solution giving acceptable differences for a given illuminant (metameric solution). In the second case (high colorimetric differences), one undertakes an assessment of the differences with respect to the STD and depending on the case:

a) The difference on a specific (main) illuminant is corrected with the tristimulus linear approach, computing the amounts to be added to those obtained from the nonlinear approach.
b) The particular combination of dyes is discarded, because unsuitable to reproduce the STD.

**Claims**

**1.** Method for the determination of the colours of a material, by means of a computational approach with linear equations of the tristimulus values in order to correct the errors or the deviations from the standard on the amounts ($\Delta X$) of red light, ($\Delta Y$) of green light and ($\Delta Z$) of blue light obtained from the calculation with nonlinear equations of the reflectance values of the light from said material, said method providing:

(a) a first step, in which the computation of the amounts (X, Y, Z) of red, green and blue light based on nonlinear equations of said reflectance values is performed;

(b) a second step, in which some linear equations for the computation of the tristimulus values are used, in order to correct the errors or the deviations ($\Delta X$, $\Delta Y$, $\Delta Z$) from the standard of the amounts (X) of red light, (Y) of green light and (Z) of blue light, as resulting from the computation performed in the previous step (a),

**characterized in that** said error in step (a) is given by the sum

$$(I) \quad {}_1\Sigma_{31}\, \Delta R \cdot i \quad \text{with } i = 1 - 31$$

where

$$\Delta R = (Rstd - Rms)^2$$

wherein:

Rstd = standard reflection
Rms = computed reflection
in which the $\Delta R$ values are determined for 31 different wavelengths, spread equidistantly over the visible light range from 400-700 nm.

2. Method according to claim 1, **characterized in that** for a three-component mixture the aforementioned linear equations of said step (b) are:

$$dX1 \cdot DQ1 + dX2 \cdot DQ2 + dX3 \cdot DQ3 = Xstd - X1°Form$$

$$dY1 \cdot DQ1 + dY2 \cdot DQ2 + dY3 \cdot DQ3 = Ystd - Y1°Form$$

$$DZ1 \cdot DQ1 + dZ2 \cdot DQ2 + dZ3 \cdot DQ3 = Zstd - Z1°Form$$

where:

DQ1 represents the addition to the formula; % of dye 1 (0-1%);
DQ2 represents the addition to the formula; % of dye 2 (0-1%);
DQ3 represents the addition to the formula; % of dye 3 (0-1%);
dX1 represents the amount of red light per unit of dye 1;
dX2 represents the amount of red light per unit of dye 2;
dX3 represents the amount of red light per unit of dye 3;
X1°Form represents the amount of red light emitted by the known formula;
dY1 represents the amount of green light per unit of dye 1;
dY2 represents the amount of green light per unit of dye 2;
dY3 represents the amount of green light per unit of dye 3;
Y1°Form represents the amount of green light emitted by the known formula;
dZ1 represents the amount of blue light per unit of dye 1;
dZ2 represents the amount of blue light per unit of dye 2;
dZ3 represents the amount of blue light per unit of dye 3;
Z1°Form represents the amount of blue light emitted by the first formula;

and wherein:

$$Xstd \text{ (amount of red light emitted by STD)} = {}_1\Sigma_{31}\, Tx \cdot E \cdot Rstd;$$

$$Ystd \text{ (amount of green light emitted by STD)} = {}_1\Sigma_{31}\ Ty \cdot E \cdot Rstd;$$

$$Zstd \text{ (amount of blue light emitted by STD)} = {}_1\Sigma_{31}\ Tz \cdot E \cdot Rstd;$$

where:

Tx, Ty, Tz are the tristimulus functions;
E represents the relative energy of the illuminant.

3. Method according to claim 2, **characterized in that** the differences of the amounts DQ1, DQ2, DQ3 are computed as a function of the difference between the standard material and the formula computed in said first step (a).

**Patentansprüche**

1. Verfahren für die Bestimmung der Farben eines Materials mittels eines rechnerischen Ansatzes mit linearen Gleichungen der Tristimuluswerte, um die Fehler oder die Abweichungen von dem Standard bei den Mengen ($\triangle X$) von rotem Licht, ($\triangle Y$) von grünem Licht und ($\triangle Z$) von blauem Licht zu korrigieren, die aus der Berechnung mit nichtlinearen Gleichungen der Reflektanzwerte des Lichts aus dem Material erhalten werden, wobei das Verfahren bereitstellt:

(a) einen ersten Schritt, bei dem die Berechnung der Mengen (X, Y, Z) von rotem, grünem und blauem Licht basierend auf nichtlinearen Gleichungen der Reflektanzwerte durchgeführt wird;
(b) einen zweiten Schritt, bei dem einige lineare Gleichungen für die Berechnung der Tristimuluswerte verwendet werden, um die Fehler oder die Abweichungen ($\triangle X$, $\triangle Y$, $\triangle Z$) von dem Standard der Mengen (X) von rotem Licht, (Y) von grünem Licht und (Z) von blauem Licht zu korrigieren, wie sie sich aus der Berechnung ergeben, die in dem vorherigen Schritt (a) durchgeführt wird,

**dadurch gekennzeichnet, dass** der Fehler in Schritt (a) gegeben ist durch die Summe

$$(\text{I}) \qquad {}_1\textstyle\sum_{31} \Delta R \cdot i \qquad \text{mit } i = 1 - 31$$

wobei

$$\Delta R = (Rstd - Rms)^2$$

wobei:

Rstd = Standardreflexion
Rms = berechnete Reflexion
wobei die $\Delta R$-Werte für 31 verschiedene Wellenlängen bestimmt werden, die gleichmäßig über den sichtbaren Lichtbereich von 400-700 nm verteilt sind.

2. Verfahren nach Anspruch 1, **dadurch gekennzeichnet, dass** für ein Dreikomponentengemisch die oben genannten linearen Gleichungen des Schritts (b) sind:

$$dX1 \cdot DQ1 + dX2 \cdot DQ2 + dX3 \cdot DQ3 = Xstd - X1°Form$$

$$dY1 \cdot DQ1 + dY2 \cdot DQ2 + dY3 \cdot DQ3 = Ystd - Y1°Form$$

$$DZ1 \cdot DQ1 + dZ2 \cdot DQ2 + dZ3 \cdot DQ3 = Zstd - Z1°Form$$

wobei:

DQ1 die Ergänzung zu der Formel darstellt; % Farbstoff 1 (0-1 %);
DQ2 die Ergänzung zu der Formel darstellt; % Farbstoff 2 (0-1 %);
DQ3 die Ergänzung zu der Formel darstellt; % Farbstoff 3 (0-1 %);
dX1 die Menge von rotem Licht pro Einheit Farbstoff 1 darstellt;
dX2 die Menge von rotem Licht pro Einheit Farbstoff 2 darstellt;
dX3 die Menge von rotem Licht pro Einheit Farbstoff 3 darstellt;
X1°Form die Menge von rotem Licht darstellt, das durch die bekannte Formel emittiert wird;
dY1 die Menge von grünem Licht pro Einheit Farbstoff 1 darstellt;
dY2 die Menge von grünem Licht pro Einheit Farbstoff 2 darstellt;
dY3 die Menge von grünem Licht pro Einheit Farbstoff 3 darstellt;
Y1 °Form die Menge von grünem Licht darstellt, das durch die bekannte Formel emittiert wird;
dZ1 die Menge von blauem Licht pro Einheit Farbstoff 1 darstellt;
dZ2 die Menge von blauem Licht pro Einheit Farbstoff 2 darstellt;
dZ3 die Menge von blauem Licht pro Einheit Farbstoff 3 darstellt;
Z1°Form die Menge von blauem Licht darstellt, das durch die erste Formel emittiert wird;

und wobei:

Xstd (Menge von rotem Licht, das durch STD emittiert wird) = $_1\Sigma_{31}$ Tx·E·Rstd;

Ystd (Menge von grünem Licht, das durch STD emittiert wird) = $_1\Sigma_{31}$ Ty·E·Rstd;

Zstd (Menge von blauem Licht, das durch STD emittiert wird) = $_1\Sigma_{31}$ Tz·E·Rstd;

wobei:

Tx, Ty, Tz die Tristimulusfunktionen sind;
E die relative Energie des Leuchtmittels darstellt.

3. Verfahren nach Anspruch 2, **dadurch gekennzeichnet, dass** die Differenzen der Mengen DQ1, DQ2, DQ3 in Abhängigkeit der Differenz zwischen dem Standardmaterial und der in dem ersten Schritt (a) berechneten Formel berechnet werden.

## Revendications

1. Procédé pour la détermination des couleurs d'un matériau, au moyen d'une approche computationnelle avec des équations linéaires des valeurs tristimulus afin de corriger les erreurs ou les écarts par rapport à la norme sur les quantités ($\Delta X$) de lumière rouge, ($\Delta Y$) de lumière verte et ($\Delta Z$) de lumière bleue obtenues à partir du calcul avec des équations non linéaires des valeurs de réflectance de la lumière provenant dudit matériau, ledit procédé prévoyant :

(a) une première étape, dans laquelle le calcul des quantités (X, Y, Z) de lumière rouge, verte et bleue sur la base d'équations non linéaires desdites valeurs de réflectance est effectué ;
(b) une seconde étape, dans laquelle certaines équations linéaires pour le calcul des valeurs tristimulus sont utilisées, afin de corriger les erreurs ou les écarts ($\Delta X$, $\Delta Y$, $\Delta Z$) par rapport à la norme des quantités (X) de lumière rouge, (Y) de lumière verte et (Z) de lumière bleue, telles qu'elles résultent du calcul effectué à l'étape précédente (a),

**caractérisé en ce que** ladite erreur à l'étape (a) est donnée par la somme

$$(I) \qquad _1\textstyle\sum_{31}\Delta R \cdot i \qquad \text{avec i = 1 à 31}$$

où

$$\Delta R = (Rstd - Rms)^2$$

où :

Rstd = réflexion standard

Rms = réflexion calculée

dans lequel les valeurs ΔR sont déterminées pour 31 longueurs d'onde différentes, réparties de manière équidistante sur la plage de lumière visible allant de 400 à 700 nm.

2. Procédé selon la revendication 1, **caractérisé en ce que** pour un mélange à trois composants, les équations linéaires susmentionnées de ladite étape (b) sont :

$$dX1 \cdot DQ1 + dX2 \cdot DQ2 + dX3 \cdot DQ3 = Xstd - X1°Form$$

$$dY1 \cdot DQ1 + dY2 \cdot DQ2 + dY3 \cdot DQ3 = Ystd - Y1°Form$$

$$DZ1 \cdot DQ1 + dZ2 \cdot DQ2 + dZ3 \cdot DQ3 = Zstd - Z1°Form$$

où :

DQ1 représente l'ajout à la formule ; % de colorant 1 (0 à 1 %) ;
DQ2 représente l'ajout à la formule ; % de colorant 2 (0 à 1 %) ;
DQ3 représente l'ajout à la formule ; % de colorant 3 (0 à 1 %) ;
dX1 représente la quantité de lumière rouge par unité de colorant 1 ;
dX2 représente la quantité de lumière rouge par unité de colorant 2 ;
dX3 représente la quantité de lumière rouge par unité de colorant 3 ;
X1°Form représente la quantité de lumière rouge émise par la formule connue ;
dY1 représente la quantité de lumière verte par unité de colorant 1 ;
dY2 représente la quantité de lumière verte par unité de colorant 2 ;
dY3 représente la quantité de lumière verte par unité de colorant 3 ;
Y1°Form représente la quantité de lumière verte émise par la formule connue ;
dZ1 représente la quantité de lumière bleue par unité de colorant 1 ;
dZ2 représente la quantité de lumière bleue par unité de colorant 2 ;
dZ3 représente la quantité de lumière bleue par unité de colorant 3 ;
Z1°Form représente la quantité de lumière bleue émise par la première formule ;

et dans lequel :

$$Xstd \text{ (quantité de lumière rouge émise par STD)} = {}_1\textstyle\sum_{31} Tx \cdot E \cdot Rstd ;$$

$$Ystd \text{ (quantité de lumière verte émise par STD)} = {}_1\textstyle\sum_{31} Ty \cdot E \cdot Rstd ;$$

$$Zstd \text{ (quantité de lumière bleue émise par STD)} = {}_1\textstyle\sum_{31} Tz \cdot E \cdot Rstd ;$$

où :

Tx, Ty, Tz sont les fonctions tristimulus ;
E représente l'énergie relative de l'illuminant.

3. Procédé selon la revendication 2, **caractérisé en ce que** les différences des quantités DQ1, DQ2, DQ3 sont calculées en fonction de la différence entre le matériau standard et la formule calculée dans ladite première étape (a).

**Fig. 1**

**Fig. 2**

STD           D65           A           F

**Fig. 3**

**Fig. 4**

STD          D65          A          F

**Fig. 5**

**Fig. 6**

**Fig. 7**

STD       D65       A       F

**Fig. 8**

EP 4 242 607 B1

Fig. 9

**EP 4 242 607 B1**

**Patent documents cited in the description**

- WO 2011126486 A1

- US 2540797 A